# EUROPEAN PATENT APPLICATION

(11) **EP 1 770 284 A2**
(43) Date of publication of application: **04.04.2007**
(21) Application number: 06020013.6
(22) Date of filing: 25.09.2006
(51) Int. Cl.: F04D 29/04

(54) **Fuell-cell compressed-air supplying device**

(30) Priority: 29.09.2005 JP 2005283348
(71) Applicant: JTEKT Corporation, Chuo-ku, Osaka-shi Osaka 542-8502 (JP)
(72) Inventor: Taniguchi, Manabu, Osaka-shi, Osaka 542-8502 (JP); Miyagawa, Yasukata, Osaka-shi, Osaka 542-8502 (JP); Ueyama, Hirochika, Osaka-shi, Osaka 542-8502 (JP)
(74) Representative: Steinmeister, Helmut

(57) **Abstract**

A fuel-cell compressed-air supplying device 6 includes a centrifugal compressor 12 provided in a casing 11 and a bearing device 14 for supporting a rotation shaft 13 of the compressor 12. The bearing device 14 includes a pair of radial foil bearings 21 and 22 provided coaxially with the rotation shaft 13 for supporting the rotation shaft 13 in the radial direction, a pair of axial foil bearings 23 and 24 facing to the rotation shaft 13 in the axial direction for supporting the rotation shaft 13 in the axial direction, and a secondary bearing means 25 which is constituted by a combination of plural permanent magnets 61a, 61b, 62a, 62b, 63a, 63b, 64a and 64b and holds the rotation shaft 13 in a non-contact manner at static states.

## Description

### BACKGROUND OF THE INVENTION

The present invention relates to a fuel-cell compressed-air supplying device installed at an oxygen-supply side in a fuel-cell apparatus which creates energy from hydrogen and oxygen, and for supplying compressed air to the fuel-cell. In particular, the present invention relates to a fuel-cell compressed-air supplying device suitably mounted to a fuel-cell vehicle.

Prototypes of fuel-cell vehicles which incorporate fuel-cells for running have been already fabricated, and Patent Literature 1 (JP-A No. 2002-70762) suggests a fuel-cell vehicle incorporating a scroll compressor as a device suitable for supplying compressed air to the fuel-cells in the fuel-cell vehicle.

In fuel-cell apparatuses for use in fuel-cell vehicles, it has become a critical challenge to reduce the sizes, costs and weights of the fuel-cell apparatuses, and there has also been a need for further reducing the sizes of the compressed-air supplying devices.

Therefore, instead of the scroll compressor described in the aforementioned Patent Literature 1, which is a type of displacement type compressor, it is conceivable to employ a non-displacement type centrifugal compressor which causes no compression variation and can be reduced in size. However, such a centrifugal compressor causes a significant variation in the axial forces which act on the impeller, thereby causing the challenge to ensure the durability of the bearing device of the centrifugal compressor. In addition, because, in a fuel-cell vehicle, lower-speed rotation during idling and higher-speed rotation during normal running are continuously repeated, there is a high demand for the compressed-air supplying device to be advantageously used during higher-speed rotation and have excellent durability.

### SUMMARY OF THE INVENTION

In view of the aforementioned circumstances, it is an object of the present invention to provide a fuel-cell compressed-air supplying device which employs a centrifugal compressor for attaining size reduction and is capable of absorbing axial force variations caused by the rotation of an impeller, which is a problem in using of the centrifugal compressor, being advantageously used during higher-speed rotation and having excellent durability.

A fuel-cell compressed-air supplying device according to the present invention is a device for compressing air and supplying the compressed air to a fuel-cell and includes a centrifugal compressor provided in a casing and a bearing device for supporting a rotation shaft of the compressor, wherein the bearing device includes a pair of radial foil bearings provided coaxially with the rotation shaft for supporting the rotation shaft in the radial direction, and a pair of axial foil bearings facing to the rotation shaft in the axial direction for supporting the rotation shaft in the axial direction.

The radial foil bearings include a flexible bearing foil having a bearing surface facing to the rotation shaft in the radial direction, an elastic member for supporting the bearing foil, and a bearing housing for holding the bearing foil and the elastic member between the bearing housing and the rotation shaft.

Further, the axial foil bearings include a flexible bearing foil having a bearing surface facing to the rotation shaft in the axial direction, an elastic member for supporting the bearing foil, and a bearing housing for holding the bearing foil and the elastic member between the bearing housing and the rotation shaft. The rotation shaft is provided with a flange portion which functions as a thrust plate, and the pair of axial foil bearings are faced to each other with the flange portion interposed therebetween.

With the aforementioned foil bearings, during the rotation of the rotation shaft, ambient air is drawn into the gaps between the bearing foils and the rotation shaft to generate pressures (dynamic pressures), thereby holding the rotation shaft in a non-contact manner.

Preferably, the bearing device further includes a secondary bearing means which is constituted by a combination of plural permanent magnets and holds the rotation shaft in a non-contact manner at static states.

During normal rotation, the rotation shaft is supported in a non-contact manner by the respective foil bearings. However, during lower-speed rotation and at halt states, smaller dynamic pressures are generated therein, which brings the rotation shaft into contact with the respective foil bearings. The secondary bearing means holds the rotation shaft in a non-contact manner, by utilizing repulsive forces acting between the permanent magnets at static states (namely, during the transition of the rotation shaft from a halt state to a normal rotation state and during the transition thereof from a lower-speed rotation state before full halt to a halt state). During the transition of the rotation shaft from a halt state to a rotation state and during the transition from a rotation state to a halt state, the secondary bearing means supports the rotation shaft in a non-contact manner, which prevents the rotation shaft from coming into contact with the respective foil bearings.

The secondary bearing means includes, for example, a first secondary bearing constituted by a pair of sets of magnets placed at the opposite end portions of the rotation shaft and near these opposite end portions and a second secondary bearing constituted by a pair of sets of magnets placed in a flange portion provided on the rotation shaft and near the flange portion. Each set of magnets is constituted by an annular-shaped rotation magnet secured to the rotation shaft and an annular-shaped fixed magnet secured to the casing so as to apply a repulsive force to the rotation magnet.

The pair of sets of magnets (the rotation magnets and the fixed magnets) in the first secondary bearing are polarized in the radial direction, while the pair of sets of magnets (the rotation magnets and the fixed magnets) in the second secondary bearing are polarized in the axial direction. For example, each set of magnets (the rotation magnet and the fixed magnet) in the first secondary bearing are placed so as to exactly face each other in the radial direction, while each set of magnets (the rotation magnet and the fixed magnet) in the second secondary bearing are placed so as to exactly face each other in the axial direction. The placement of the respective sets of magnets is not limited to the aforementioned placement, and the sets of magnets in the first secondary bearing, which are radially polarized, may be placed to be axially displaced to some degrees from the positions radially exactly facing to each other, while the sets of magnets in the second secondary bearing, which are axially polarized, may be placed to be radially displaced to some degrees from the positions axially exactly facing to each other. By displacing them as described above, it is possible to generate both radial repulsive forces and axial repulsive forces between the magnets, thereby stably holding the rotation shaft.

In the case of displacing them, it is possible to form a secondary bearing member from a pair of sets of magnets,
wherein such a secondary bearing means includes at least two annular-shaped rotation magnets secured to the rotation shaft and at least two annular-shaped fixed magnets secured to the casing for applying repulsive forces to the rotation magnets, and the fixed magnets are displaced from the rotation magnets, in order to generate both radially inward forces and axially inward forces which act on the rotation magnets.

With the fuel-cell compressed-air supplying device according to the present invention, the rotation shaft is supported in both the radial and axial directions by the foil bearings (dynamic-pressure gas bearings), which can suppress the reduction of the fatigue life of the bearings due to high-speed rotation and also can eliminate the necessity of providing the function of circulating lubricating oil, thereby enabling the reduction of the size of the compressed-air supplying device.

Further, in the case where the fuel-cell compressed-air supplying device includes a secondary bearing means constituted by a combination of plural permanent magnets for holding the rotation shaft in a non-contact manner at static states, it is possible to prevent the occurrence of the problem of partial wear and rotation-performance degradation which may be caused by the contact between the rotation shaft and the foil bearings, during halts of rotation, at the start of rotation and during lower-speed rotation, which can further improves the durability of the compressed-air supplying device.

### BRIEF DESCRIPTION OF THE DRAWINGS

Fig. 1 is a block diagram illustrating a fuel-cell apparatus employing a fuel-cell compressed-air supplying device according to the present invention;
Fig. 2 is a longitudinal cross-sectional view schematically illustrating the fuel-cell compressed-air supplying device according to the present invention;
Fig. 3 is a cross-sectional view illustrating a radial foil bearing for use in a fuel-cell compressed-air supplying device according to the present invention;
Fig. 4 is views illustrating an axial foil bearing used in the fuel-cell compressed-air supplying device according to the present invention, wherein Fig. 4(a) is an enlarged longitudinal cross-sectional view and Fig. 4(b) is a cross-sectional view along a circumferential direction;
Fig. 5 illustrates foil bearings of another type which are usable in the fuel-cell compressed-air supplying device according to the present invention, wherein Fig. 5(a) is a cross-sectional view of a radial foil bearing and Fig. 5 (b) is a cross-sectional view of an axial foil bearing along a circumferential direction;
Fig. 6 is a view schematically illustrating a first secondary bearing in a secondary bearing means in the fuel-cell compressed-air supplying device according to the present invention; and
Fig. 7 is a view schematically illustrating a second secondary bearing in a secondary bearing means in the fuel-cell compressed-air supplying device according to the present invention.

### DETAILED DESCRIPTION OF THE PREFERRED EMBODIMENT

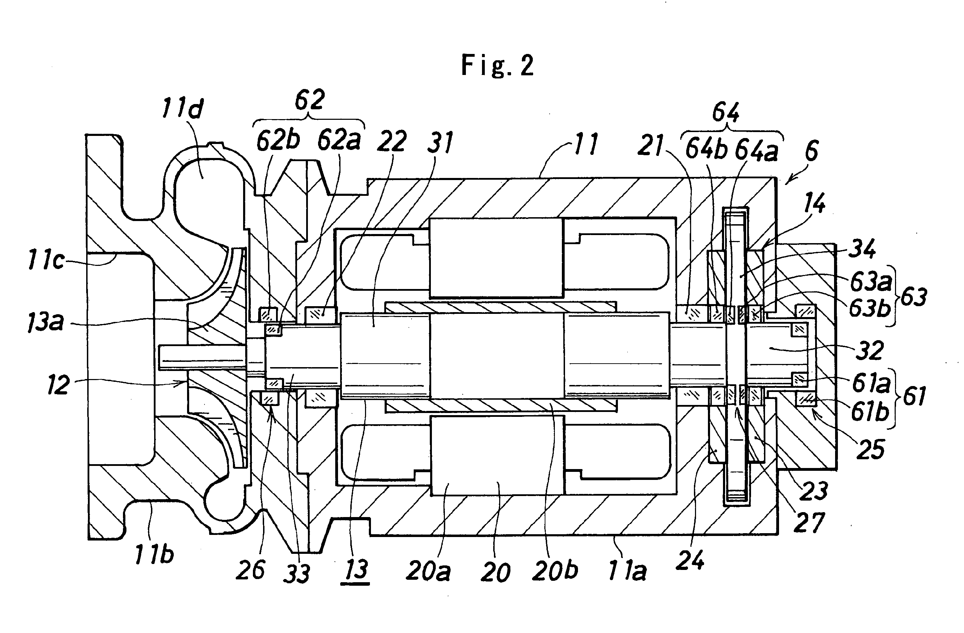

There will be described an embodiment of the present invention, with reference to the drawings. In the following description, the right and the left in Fig. 2 will be designated as front and back, respectively.

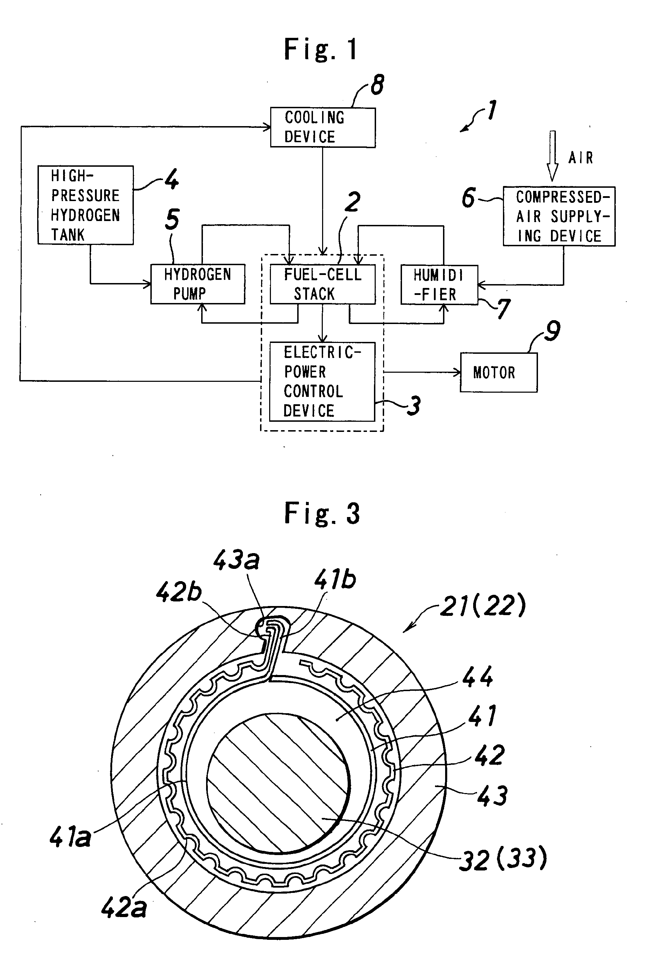

Fig. 1 illustrates a fuel-cell apparatus to be mounted in a vehicle which employs a fuel-cell compressed-air supplying device according to the present invention. The fuel-cell apparatus (1) includes a fuel-cell stack (2), an electric-power control device (3) which controls the electric power supplied from the fuel-cell stack (2), a high-pressure hydrogen tank (4) and a hydrogen pump (5) which supply hydrogen to the fuel-cell stack (2), a compressed-air supplying device (6) which supplies compressed air to the fuel-cell stack (2), a humidifier (7) which humidifies the compressed air supplied from the compressed-air supplying device (6), and a cooling device (8) which cools the fuel-cell stack (2) and the electric-power control device (3), wherein a motor (9) for running the vehicle is driven by the electric energy provided from the fuel-cell stack (2).

Fig. 2 illustrates the general configuration of the fuel-cell compressed-air supplying device according to the present invention, wherein the fuel-cell compressed-air supplying device (6) includes a centrifugal compressor (12) provided within a casing (11) and a bearing device (14) which supports a rotation shaft (13) of the compressor (12).

The centrifugal compressor (12) is a non-displacement type compressor in which the rotation shaft (13) which is a horizontal shaft is rotated within the hermetic casing (11) having substantially a cylindrical shape which is placed along an anteroposterior and horizontal axis.

The casing (11) is constituted by a rotation-shaft supporting portion (11a) at the front side and a gas flow channel portion (11b) at the rear side.

The rotation shaft (13) has a stepped-shaft shape and is placed in the space within the rotation-shaft supporting portion (11a). An impeller (13a) positioned in the space within the gas flow channel portion (11b) is secured to the rear end of the rotation shaft (13).

Inside the rotation-shaft supporting portion (11a), there are provided a built-in motor (20) for rotating the rotation shaft (13) at a high speed, a pair of front and rear radial foil bearings (21) and (22) which support the rotation shaft (13) in the radial direction, a pair of front and rear axial foil bearings (23) and (24) which support the rotation shaft (13) in the axial direction (anteroposterior direction), and a secondary bearing means (25) for subsidiary supporting the rotation shaft (13) in both the radial and axial directions.

The motor (20) is constituted by a stator (20a) provided at the rotation-shaft supporting portion (11a) and a rotor (20b) provided at the rotation shaft (13).

The bearing device (14) is constituted by the front and rear radial foil bearings (21) and (22), the front and rear axial foil bearings (23) and (24), and the secondary bearing means (25).

A gas inlet channel (11c) is provided at the rear end of the space within the gas flow channel portion (11b). The rotation of the rotation shaft (13) causes the impeller (13a) to rotate. Through the rotation of the impeller (13a), air is flowed into a space (11d) in the gas flow-channel portion (11b) through the gas inlet channel (11c), then is compressed within the same space (11d) and is discharged through a gas outlet channel, not illustrated, which is communicated with the aforementioned space (11d).

The stepped rotation shaft (13) is constituted by a larger-diameter portion (31) on which the rotor (20b) of the motor (20) is provided, and front and rear smaller-diameter portions (32) (33) which are continuous with the larger-diameter portion (31) outwardly in the frontward and rearward directions. A flange portion (34) is provided on the front smaller-diameter portion (32), at the axial middle portion thereof. The rear smaller-diameter portion (33) has a smaller diameter at its rear end portion, and the impeller (13a) is mounted to the portion.

The radial foil bearings (21) and (22) are provided on the front and rear smaller-diameter portions (32) and (33) of the rotation shaft (13), respectively, at positions closer the larger-diameter portion (31).

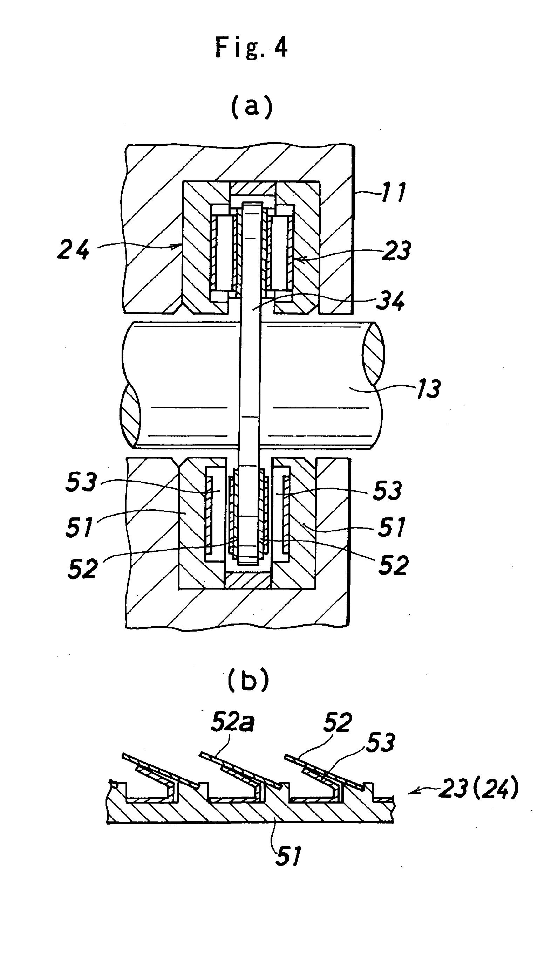

As illustrated in Fig. 3, each of the radial foil bearings (21) (22) is constituted by a flexible top foil (bearing foil) (41) placed radially outside of the smaller-diameter portion (32) (33) of the rotation shaft with a bearing gap (44) interposed therebetween, a bump foil (elastic member) (42) placed radially outside of the top foil (41), and an outer ring (bearing housing) (43) placed radially outside of the bump foil (42).

The top foil (41) is made of a band-shaped stainless-steel plate and is formed by rolling the band-shaped stainless-steel plate into a cylindrical shape having opposite longitudinal ends adjacent to each other without circumferential overlapping, then cutting and bending, in the radial direction, the opposite axial end portions of one end portion of the cylindrically-shaped steel plate and then folding their tip ends. The cylindrical portion (41a) other than the cut-and-bent portions forms the main portion of the top foil, while the cut-and-bent portions (41b) form engagement portions of the top foil (41).

The bump foil (42) is constituted by a cylindrical portion (42a) made of a stainless-steel waveform plate member deformed into a cylindrical shape and an engagement portion (42b) which is continuous with one end of the cylindrical portion (42a) and is positioned radially outside of the cylindrical portion (42a).

An engagement groove (43a) extending substantially in the radial direction is formed in the inner peripheral surface of the outer ring (43). The cylindrical portion (42a) of the bump foil (42) is placed along the inner peripheral surface of the outer ring (43) and the engagement portion (42b) is engaged with the engagement groove (43a) of the outer ring (43) so that the bump foil (42) is mounted to the outer ring (43). Further, the cylindrical portion (41a) of the top foil (41) is interposed between the bump foil (42) and the smaller diameter portion (32) (33) of the rotation-shaft and the engagement portion (41b) thereof is engaged with the engagement groove (43a) in the outer ring (43) so that the top foil (41) is mounted to the outer ring (43).

Since the top foil (41) is made of a band-shaped stainless-steel plate rolled into a cylindrical shape having opposite longitudinal ends adjacent to each other without circumferential overlapping and, thus, has a constant radius of curvature and high roundness, the radial foil bearings (21) (22) have excellent performance for supporting of the rotation shaft (13) and excellent characteristics for floating the rotation shaft (13).

As illustrated in Fig. 4, each of the axial foil bearings (23) (24) is constituted by a bearing housing (51) secured to the casing (11), a bearing foil (52) constituted by plural flexible foil pieces (52a) which are circumferentially placed between the bearing housing (51) and the flange portion (34) of the rotation shaft (13) and secured at their one ends to the bearing housing (51), and an elastic member (53) placed between the bearing foil (52) and the bearing housing (51) for elastically supporting the bearing foil (52). The flange portion (34) of the rotation shaft (13) functions as a thrust plate which faces to the bearing housing (51) and rotates integrally with the rotation shaft (13) in the axial foil bearings (23) (24).

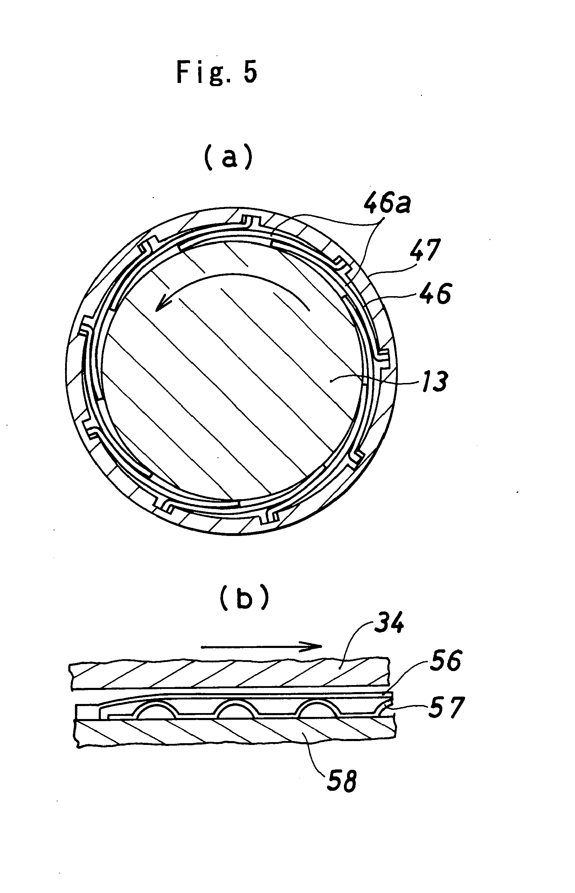

Further, the radial foil bearings (21) (22) and the axial foil bearings (23) (24) are not limited to the aforementioned bearings, and the radial foil bearings may include a bearing foil (46) constituted by plural flexible foil pieces (46a) each having a bearing surface faced to the rotation shaft (13) and a bearing housing (47) for holding the bearing foil (46) between the bearing housing (47) and the rotation shaft (13) as illustrated in Fig. 5(a), while the axial foil bearings may include a flexible top foil (bearing foil) (56) having a bearing surface facing to the rotation-shaft flange portion (34), a bump foil (elastic member) (57) for supporting the top foil (56), and a bearing housing (58) for holding the top foil (56) and the bump foil (57) between the bearing housing (58) and the rotation-shaft flange portion (34), as illustrated in Fig. 5(b).

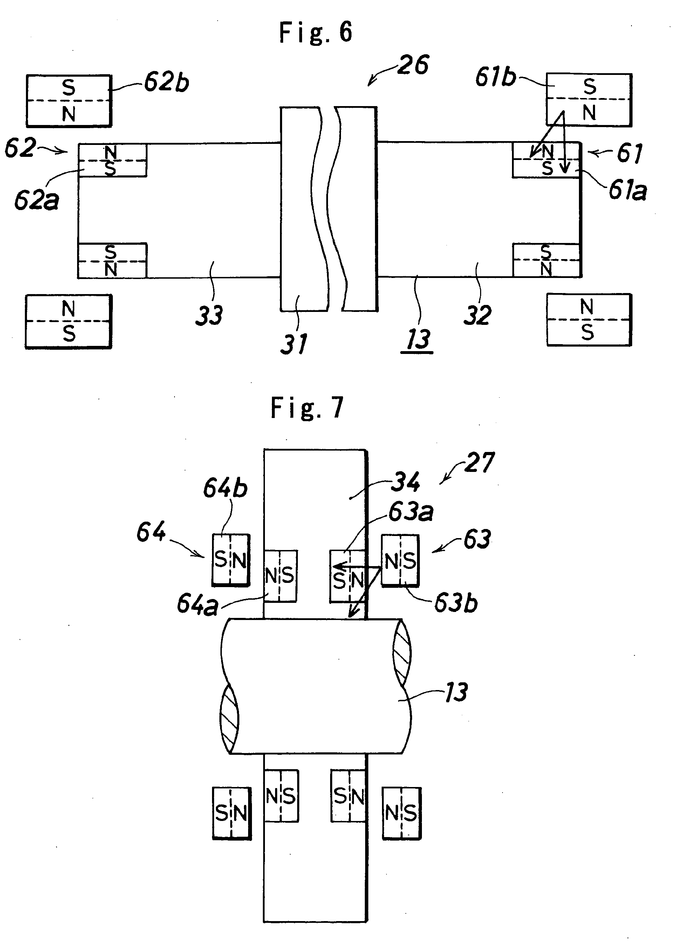

The secondary bearing means (25) is constituted by a first secondary bearing (26) illustrated in detail in Fig. 6 and a second secondary bearing (27) illustrated in detail in Fig. 7.

The first secondary bearing (26) is constituted by a pair of front and rear sets of magnets (61) and (62), wherein the front set of magnets (61) is constituted by an annular-shaped front rotation magnet (61a) secured to the front end portion of the front smaller-diameter portion (32) of the rotation shaft (13) and an annular-shaped front fixed magnet (61b) secured to the portion of the casing (11) corresponding to the front end portion of the front smaller-diameter portion (32) of the rotation shaft (13), while the rear set of magnets (62) is constituted by an annular-shaped rear rotation magnet (62a) secured to the rear end portion of the rear smaller-diameter portion (33) of the rotation shaft (13) and an annular-shaped rear fixed magnet (62b) secured to the portion of the casing (11) corresponding to the rear end portion of the rear smaller-diameter portion (33) of the rotation shaft (13). The rotation magnets (61a) and (62a) are embedded in annular recessed portions provided at the outer end portions of the front and rear smaller-diameter portions (32) and (33) of the rotation shaft (13), respectively, such that they are flush with the front and rear smaller-diameter portions (32) and (33) of the rotation shaft (13).

The second secondary bearing (27) is constituted by a pair of front and rear sets of magnets (63) and (64), wherein the front set of magnets (63) is constituted by an annular-shaped front rotation magnet (63a) secured to the front side of the flange portion (34) of the rotation shaft (13) and an annular-shaped front fixed magnet (63b) secured to the portion of the casing (11) corresponding to the front-side portion of the flange portion (34) of the rotation shaft (13), while the rear set of magnets (64) is constituted by an annular-shaped rear rotation magnet (64a) secured to the rear side of the flange portion (34) of the rotation shaft (13) and an annular-shaped rear fixed magnet (64b) secured to the portion of the casing (11) corresponding to the rear-side portion of the flange portion (34) of the rotation shaft (13). The rotation magnets (63a) and (64a) are embedded in annular recessed portions provided in the front and rear side surfaces of the flange portion (34) of the rotation shaft (13), respectively, such that they are flush with the flange portion (34).

The rotation magnets (61a) (62a) and the fixed magnets (61b) (62b) constituting the pair of front and rear sets of magnets (61) and (62) in the first secondary bearing (26) are polarized such that they generate radial repulsive forces against each other, and the fixed magnets (61b) and (62b) are secured to the casing (11) such that they are faced to the rotation magnets (61a) and (62a) from the outside in the radial direction. The rotation magnets (63a) and (64a) and the fixed magnets (63b) and (64b) constituting the pair of front and rear sets of magnets (63) and (64) in the second secondary bearing (27) are polarized such that they generate axial repulsive forces against each other, and the fixed magnets (63b) and (64b) are secured to the casing (11) such that they are faced to the rotation magnets (63a) and (64a) from the outside in the axial direction.

The respective fixed magnets (61b) (62b) (63b) and (64b) are secured to the casing (11), in the following manner. In the sets of the magnets (61) and (62) in the first secondary bearing (26) which are polarized in the radial direction, the rotation magnets (61a) (62a) and the fixed magnets (61b) (62b) are not completely aligned with each other in the radial direction, but the fixed magnets (61b) (62b) are placed to be axially outwardly displaced to some degrees from the positions radially faced to the rotation magnets (61a) (62a). In the sets of the magnets (63) and (64) in the second secondary bearing (27) which are polarized in the axial direction, the rotation magnets (63a) (64a) and the fixed magnets (63b) (64b) are not completely aligned with each other in the axial direction, but the fixed magnets (63b) (64b) are placed to be radially outwardly displaced to some degrees from the positions axially exactly faced to the rotation magnets (63a) (64a). Thus, in any of the sets of magnets (61) (62) (63) and (64), there are generated both radial repulsive forces and axial repulsive forces between the respective fixed magnets (61b) (62b) (63b) and (64b) and the corresponding rotation magnets (61a) (62a) (63a) and (64a).

With the aforementioned fuel-cell compressed-air supplying device (6), the rotation shaft (13) is supported by dynamic pressures generated in the respective foil bearings (21) (22) (23) and (24), in a non-contact manner, during high-speed rotations. During rotation at a lower speed, smaller dynamic pressures are generated in the respective foil bearings (21) (22) (23) and (24) and the rotation shaft (13) tries to come into contact with the respective foil bearings (21) (22) (23) and (24), but the secondary bearing means (25) applies radially inward forces and axially inward forces to the rotation shaft (13), which prevents the rotation shaft (13) from being displaced in such a direction that it comes into contact with the respective foil bearings (21) (22) (23) and (24). This can stably support the rotation shaft (13) in a non-contact manner during both high-speed rotation and low-speed rotation, thereby ensuring smooth rotation thereof and improving the durability (life) thereof.

Further, the configuration of the secondary bearing means (25) is not limited to the aforementioned configuration, and various types of changes can be made thereto, provided that the rotation shaft can be held in a non-contact manner through plural permanent magnets at static states (namely, during the transition of the rotation shaft from a halt state to a normal rotation state and during the transition thereof from a low-speed rotation state before full halt to a halt state).

## Claims

1. A fuel-cell compressed-air supplying device for compressing air and supplying the compressed air to a fuel-cell, comprising:
a centrifugal compressor provided in a casing; and
a bearing device for supporting a rotation shaft of the compressor, wherein
the bearing device includes a pair of radial foil bearings provided coaxially with the rotation shaft for supporting the rotation shaft in the radial direction, and a pair of axial foil bearings facing to the rotation shaft in the axial direction for supporting the rotation shaft in the axial direction.

2. The fuel-cell compressed-air supplying device according to Claim 1, wherein
the bearing device further includes a secondary bearing means which is constituted by a combination of plural permanent magnets and holds the rotation shaft in a non-contact manner at static states.

3. The fuel-cell compressed-air supplying device according to Claim 2, wherein
the secondary bearing means includes a first secondary bearing constituted by a pair of sets of magnets placed at the opposite end portions of the rotation shaft and near these opposite end portions and a second secondary bearing constituted by a pair of sets of magnets placed in a flange portion provided on the rotation shaft and near the flange portion.

4. The fuel-cell compressed-air supplying device according to Claim 3, wherein
each set of magnets in the secondary bearing is constituted by an annular-shaped rotation magnet secured to the rotation shaft and an annular-shaped fixed magnet secured to the casing so as to apply a repulsive force to the rotation magnet.

5. The fuel-cell compressed-air supplying device according to Claim 4, wherein
the rotation magnets and the fixed magnets in the first secondary bearing are polarized in the radial direction, while the rotation magnets and the fixed magnets in the second secondary bearing are polarized in the axial direction, and
the rotation magnets and the fixed magnets in the first secondary bearing are placed so as to exactly face each other in the radial direction, while the rotation magnets and the fixed magnets in the second secondary bearing are placed so as to exactly face each other in the axial direction.

6. The fuel-cell compressed-air supplying device according to Claim 4, wherein
the rotation magnets and the fixed magnets in the first secondary bearing are radially polarized, and the rotation magnets and the fixed magnets in the first secondary bearing are placed to be axially displaced to some degrees from the positions radially exactly facing to each other.

7. The fuel-cell compressed-air supplying device according to Claim 4, wherein
the rotation magnets and the fixed magnets in the second secondary bearing are axially polarized, and the rotation magnets and the fixed magnets in the second secondary bearing are placed to be radially displaced to some degrees from the positions axially exactly facing to each other.

8. The fuel-cell compressed-air supplying device according to Claim 2, wherein
the secondary bearing means includes at least two annular-shaped rotation magnets secured to the rotation shaft and at least two annular-shaped fixed magnets secured to the casing for applying repulsive forces to the rotation magnets, and
the fixed magnets are displaced from the rotation magnets, in order to generate both radially inward forces and axially inward forces which act on the rotation magnets.
